# EUROPEAN PATENT APPLICATION

(11) **EP 4 369 731 A1**
(43) Date of publication of application: **15.05.2024**
(21) Application number: 23207050.8
(22) Date of filing: 31.10.2023
(51) Int. Cl.: H04N 25/773

(54) **FAST ENABLE AND DISABLE SCHEMES FOR SPAD PIXELS**

(30) Priority: 03.11.2022 US 202217980101
(71) Applicant: STMicroelectronics (Research & Development) Limited, Marlow SL7 1EY (GB)
(72) Inventor: AL-RAWHANI, Mohammed, GLASGOW, G11 6DL (GB); RAE, Bruce, EDINBURGH, EH10 6UX (GB)
(74) Representative: Cabinet Beaumont

(57) **Abstract**

A pixel includes a SPAD having a cathode connected to a first node and an anode coupled to a first negative voltage, and a transistor circuit coupled between a supply voltage and a third node, that turns on in response to an enable signal. A cascode transistor connected between the third node and the first node is controlled by a cascode control signal. A cathode setting capacitor is connected between the first node and ground. A readout inverter is coupled between the intermediate node and an output node and generates an output signal. Turn-on of the transistor circuit sources current from the supply voltage node to the cathode setting capacitor, setting a reverse bias voltage across the SPAD to greater than its breakdown voltage. A photon impinging upon the SPAD cause avalanche of the SPAD which, when occurring after turn off of the transistor circuit, discharges the cathode setting capacitor.

## Description

### TECHNICAL FIELD

This disclosure is related to the field of photodetection pixels and, in particular, to a photodetection pixel utilizing fast acting enable/disable circuitry to avoid false target detection by the photodetection pixel.

### BACKGROUND

Single photon avalanche diode (SPAD) photodetectors are based on a PN junction that is reverse biased at a voltage exceeding a breakdown voltage. When a photon-generated carrier (via the internal photoelectric effect) is injected into the depletion region of the PN junction, a self-sustaining avalanche ensues, and detection of current output as a result of this avalanche can be used to indicate detection of the photon that generated the carrier. This avalanche is stopped by lowering the reverse bias across the SPAD for a short time interval, and it is this time interval that determines the dead time (e.g., the period of time after the detection of a photon where no subsequent detection is possible).

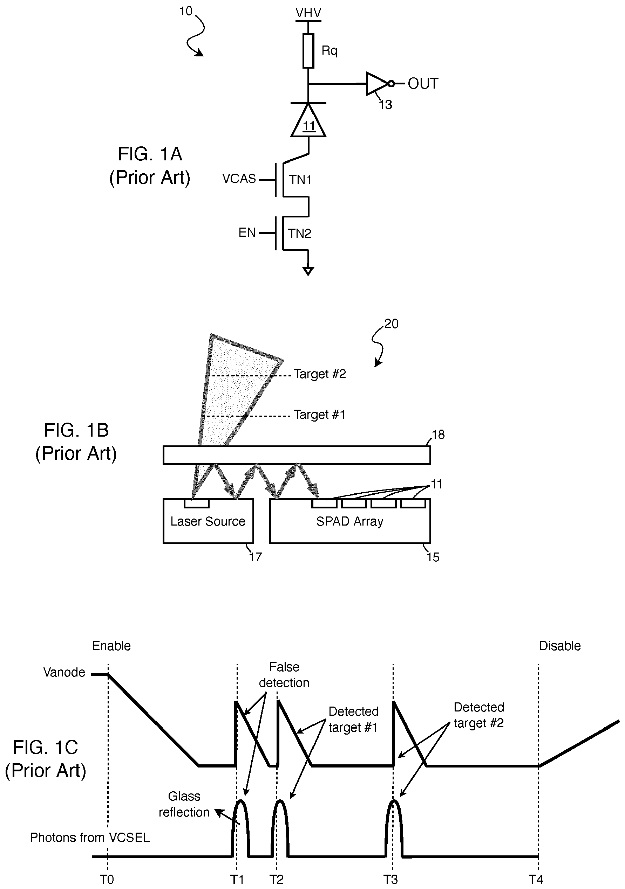

A sample prior art pixel 10 for use in a photodetector is shown in FIG. 1A. The pixel 10 includes a SPAD 11 having a cathode coupled to a high voltage supply VHV through a quench resistor Rq and having its anode coupled to ground through cascode transistor TN1 and enable transistor TN2.

The cascode transistor TN1 (an n-channel MOSFET transistor) has its drain connected to the anode of SPAD 11, its source connected to the drain of enable transistor TN2, and its gate coupled to receive a cascode control signal VCAS. The enable transistor TN2 (an n-channel MOSFET transistor) has its source connected to ground and its gate coupled to receive an enable signal EN. An output inverter 13 has its input connected the cathode of the SPAD and provides an output detection signal OUT at its output.

When the enable signal EN turns on to couple the anode of SPAD 11 to ground, the reverse bias voltage of the SPAD 11 is set above its breakdown voltage. When an incoming photon strikes the SPAD 11, the SPAD 11 will avalanche and the voltage at its anode will swing between the voltage VHV and the SPAD breakdown voltage, creating a current pulse that is detected by the inverter 13. The avalanche is quenched by the quench resistor Rq. This resets the SPAD 11 for the next detection, with the duration of this reset period setting the dead time.

Shown in FIG. 1B is a diagrammatical view of a time-of-flight ranging system 20 including a laser source 17 and an array 15 of SPADs 11. A laser beam generated by the laser source 17 is directed through a glass 18 toward a scene. The laser beam reflects off targets in the scene and returns to the time-of-flight ranging system 20, entering through the glass 18 and impinging upon one or more SPADs 11 in the array 15. By measuring the elapsed time between emission of a pulse of the laser beam and receipt of a reflection at the array 15, given that the speed of light is known and constant, the distance between the time-of-flight ranging system 20 and the target can be determined.

Ideally, the laser beam as emitted by the laser source 17 passes completely through the glass 18 as it exits the time-of-flight ranging system 20. However, in actuality, portions of pulses of the laser beam emitted by the laser source 17 may reflect off the glass 18 and strike the array 15, thereby causing a false detection if the pixels 11 of the array 15 happen to be enabled at this time.

This issue of false detection may be best understood with reference to FIG. 1C. At time T0, the enable transistor TN2 is switched on into saturation by assertion of the enable signal EN to enable operation of the pixel 11, setting the reverse bias voltage of the SPAD 11 above its breakdown. After time T0 but before time T1, the laser source 17 is activated. An emitted laser pulse reflects off the glass 18 and returns to the array 15 at time T1, causing a false detection event. At time T2, a laser pulse that has reflected off a first target returns to the array 15 and is detected - notice that despite this first target being close to the time-of-flight ranging system 20, the first reflection therefrom is properly detected because the enable signal EN was asserted prior to activation of the laser source 17, although this leads to excess power consumption since the pixels 11 are enabled prior to actually being needed. At time T3, a laser pulse that has reflected off a second target returns to the array 15 and is detected. At time T4, the enable signal EN is deasserted, disabling the pixel 11.

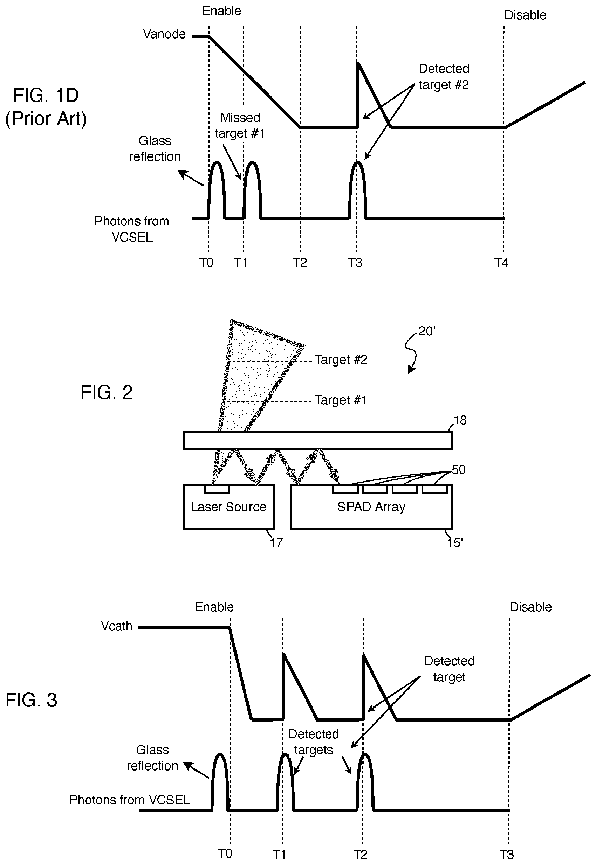

Consider now how to correct the issue of the first reflection off the glass 18 causing a false detection event. Referring to FIG. 1D, if the assertion of the enable signal EN and the activation of the laser source 17 were to occur substantially simultaneously at time T0, the first reflection of the laser from the glass 18 would indeed not be detected, but at time T1 when the reflection of the laser from the first target arrives at the array 15, enabling of the pixels 11 would not be complete, and therefore the first detection of the first target would be missed. This is clearly undesirable, as the ranging distance of the time-of-flight ranging system 10 would be negatively impacted, losing the first few meters of range since the reflection of the laser off close targets upon enabling of the pixel 11 would be missed.

Therefore, further development is needed.

### SUMMARY

Disclosed herein is an array of single photon avalanche diodes (SPADs), the array including a plurality of pixels, each pixel itself including: a SPAD having a cathode connected to a first node and an anode coupled to a first negative voltage; a transistor circuit coupled between a supply voltage node and a third node, said transistor circuit configured to turn on in response to an enable signal; a cascode transistor connected between the third node and the first node, the cascode transistor controlled by a cascode control signal; and a cathode setting capacitor connected between the first node and ground. A readout inverter is coupled between an intermediate node and an output node, the readout inverter configured to generate an output signal in response to a voltage at the intermediate node. A logic circuit is connected to receive the output signal and pass the output signal as a main output signal when the transistor circuit is turned on but block the output signal when the transistor circuit is turned off. Turn on of the transistor circuit serves to source current from the supply voltage node to the cathode setting capacitor to charge the cathode setting capacitor, thereby setting a reverse bias voltage across the SPAD to greater than a breakdown voltage of the SPAD. A photon impinging upon the SPAD causes avalanche of the SPAD which, when occurring after turn off of the transistor circuit, serves to discharge the cathode setting capacitor.

The transistor circuit may include a selectable high impedance path and a selectable low impedance path, and the transistor circuit may be configured to select the low impedance path for sourcing of the current from the supply voltage node to the cathode setting capacitor and select the high impedance path for normal operation after the reverse bias voltage of the SPAD is set to greater than the breakdown voltage of the SPAD.

The transistor circuit may include: a quench transistor connected between the supply voltage node and a second node, the quench transistor being controlled by a quench control signal to operate in a high-impedance mode; and an enable transistor connected between the second node and the third node, the enable transistor being controlled by the enable signal.

The transistor circuit may also include comprises a fast charge transistor connected between the supply voltage node and the third node, the transistor circuit being controlled by a fast enable signal, the fast enable signal being asserted prior to assertion of the enable signal and being deasserted after assertion of the enable signal.

The fast charge transistor may be a double layer gate oxide p-channel transistor having its source connected to the supply voltage node, its drain connected to the third node, and its gate connected to the fast enable signal.

The cascode transistor may be an extended drain p-channel transistor having its source connected to the third node, its drain connected to the first node, and its gate controlled by the cascode control signal.

The enable transistor may be a thin gate oxide p-channel transistor having its source connected to a fourth node, its drain connected to the intermediate node, and its gate controlled by the enable signal.

The quench transistor may be a first p-channel transistor having its source connected to the supply voltage node, its drain connected to the fourth node, and its gate controlled by the quench control signal.

The logic circuit may be an AND gate configured to perform a logical AND operation between the output signal and a main enable signal, the main enable signal being at logic high when the transistor circuit is turned on and being a logic low when the transistor circuit is turned off.

Also disclosed herein is a method of detecting photons impinging upon a single photon avalanche diode (SPAD) within a pixel. The method includes: enabling the SPAD for photon detection by pre-charging a capacitor coupled between a cathode of the SPAD and a reference voltage and, after pre-charging of the capacitor, electrically coupling the cathode of the SPAD to a supply voltage; performing photon detection using the SPAD; electrically decoupling the cathode of the SPAD from the supply voltage; and receiving a photon at the SPAD to thereby cause the SPAD to avalanche, the avalanching of the SPAD causing to discharge the capacitor through the SPAD. The pre-charging of the capacitor may be performed by connecting a low-impedance path between the supply voltage and the cathode of the SPAD. The cathode of the SPAD may be electrically coupled to the supply voltage is performed by connecting a high-impedance path between the supply voltage and the cathode of the SPAD.

Photon detection may be ignored after electrical decoupling of the cathode from the supply voltage.

Also disclosed herein is a pixel including: a SPAD having a cathode connected to a first node and an anode coupled to a first negative voltage; a transistor circuit coupled between a supply voltage node and a third node, said transistor circuit configured to turn on in response to an enable signal; a cascode transistor connected between the third node and the first node, the cascode transistor controlled by a cascode control signal; and a cathode setting capacitor connected between the first node and ground. A readout inverter is coupled between an intermediate node and an output node, the readout inverter configured to generate an output signal in response to a voltage at the intermediate node. A photon impinging upon the SPAD causes avalanche of the SPAD which, when occurring after turn off of the transistor circuit, serves to discharge the cathode setting capacitor.

The transistor circuit may include a selectable high impedance path and a selectable very low impedance path, the transistor circuit may be configured to select the low impedance path for sourcing of the current from the supply voltage node to the cathode setting capacitor and select the high impedance path for normal operation after a reverse bias voltage of the SPAD is set to greater than the breakdown voltage of the SPAD.

The transistor circuit may include a quench transistor connected between the supply voltage node and a second node, the quench transistor being controlled by a quench control signal to operate in a high-impedance mode, and an enable transistor connected between the second node and the third node, the enable transistor being controlled by the enable signal.

The transistor circuit may further include a fast charge transistor connected between the supply voltage node and the third node, the transistor circuit being controlled by a fast enable signal, the fast enable signal being asserted prior to assertion of the enable signal and being deasserted after assertion of the enable signal.

An AND gate may be configured to perform a logical AND operation between the output signal and a main enable signal, the main enable signal being at logic high when the transistor circuit is turned on and being a logic low when the transistor circuit is turned off.

### BRIEF DESCRIPTION OF THE DRAWINGS

FIG. 1A is a schematic block diagram of a prior art pixel for use in a photodetector.
FIG. 1B is a diagrammatical view of a prior art time-of-flight ranging system incorporating the prior art pixel of FIG. 1A.
FIG. 1C is a graph showing the anode voltage of the prior art time-of-flight ranging system of FIG. 1B during operation in which false detections of the reflection of the laser from the glass occur.
FIG. 1D is a graph showing the anode voltage of the prior art time-of-flight ranging system of FIG. 1B during operation in which missed detections of the reflection of the laser from the glass occur.
FIG. 2 is a diagrammatical view of a time-of-flight ranging system incorporating a pixel disclosed herein.
FIG. 3 is a graph showing the cathode voltage of a pixel of the time-of-flight ranging system of FIG. 2 during operation.
FIG. 4 is a schematic block diagram of the pixel of the time-of-flight ranging system of FIG. 2.
FIG. 5 is a graph showing the enable signal and cathode voltage of the pixel of FIG. 4 during operation.
FIG. 6 is a schematic block diagram of another design of pixel usable in the time-of-flight ranging system of FIG. 2.
FIG. 7 is a graph showing the enable signal, fast enable signal, and cathode voltage of the pixel of FIG. 6 during operation.
FIG. 8 is a graph comparing the cathode voltage of the pixels of FIGS. 4 and 6 during operation.

### DETAILED DESCRIPTION

The following disclosure enables a person skilled in the art to make and use the subject matter disclosed herein. The general principles described herein may be applied to embodiments and applications other than those detailed above without departing from the spirit and scope of this disclosure. This disclosure is not intended to be limited to the embodiments shown, but is to be accorded the widest scope consistent with the principles and features disclosed or suggested herein. Do note that in the below description, any described resistor or resistance is a discrete device unless the contrary is stated, and is not simply an electrical lead between two points. Thus, any described resistor or resistance coupled between two points has a greater resistance than a lead between those two points would have, and such resistor or resistance cannot be interpreted to be a lead. Similarly, any described capacitor or capacitance is a discrete device unless the contrary is stated, and is not a parasitic unless the contrary is stated. Moreover, any described inductor or inductance is a discrete device unless the contrary is stated, and is not a parasitic unless the contrary is stated.

Referring now to FIG. 2, a time-of-flight ranging system 20' similar to that described above with reference to FIG. 1B is described. Shown in FIG. 2 is a diagrammatical view of the time-of-flight ranging system 20' including a laser source 17 and an array 15' of SPAD pixels 50, with a glass 18 covering the laser source 17 and array 15'. As explained above, in operation to perform time-of-flight ranging, a laser beam generated by the laser source 17 is directed through the glass 18 toward a scene. The laser beam reflects off targets in the scene and returns to the time-of-flight ranging system 20', entering through the glass 18 and impinging upon one or more SPADs 50 in the array 15'. By measuring the elapsed time between emission of a pulse of the laser beam and receipt of a reflection at the array 15', given that the speed of light is known and constant, the distance between the time-of-flight ranging system 20' and the target can be determined.

Referring to FIG. 3, the aim of the pixels 50 to be disclosed herein will be described and thereafter the structure of the pixels 50 will be described. The laser source 17 is activated prior to beginning of enablement of the pixels 50 of the array 15' at time T0. Therefore, the pixels 50 are not fully enabled at the initial reflection of the laser from the glass 18 and a false detection event is avoided. By timing the enablement of the pixels of the array 15' such that the pixels 50' are fully enabled immediately after the receipt of the initial reflection of the laser from the glass 18, the detection of the first target at time T1 is not missed and detection of the second target at time T2 may proceed as usual. At time T3, the active pixels 50' are disabled.

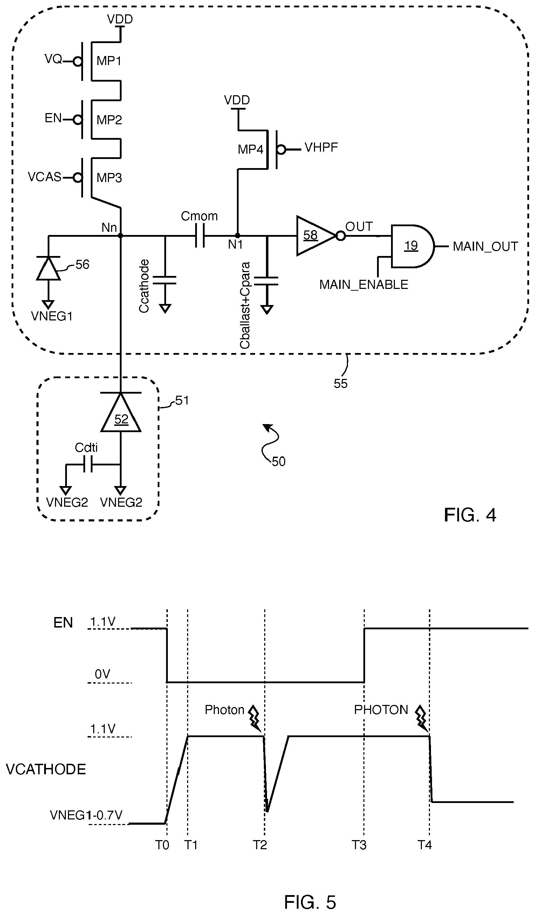

Now described with reference to FIG. 4 is the SPAD pixel 50 enabling the operation described above with reference to FIG. 3. The SPAD pixel 50 is usable in any device utilizing time-of-flight sensing, and may be used in multi-zone ranging as well as true-depth ranging (e.g., high resolution for applications such as facial recognition, room mapping, and augmented reality/virtual reality applications). The SPAD pixel 50 is formed in a stacked die solution where a top tier chip includes the circuitry in box 51 and a bottom tier chip includes the circuitry in box 55. The top tier chip 51 and bottom tier chip 55 are connected at node Nn, which represents a hybrid bond - a pixel level wafer to wafer electrical connection.

The top tier chip 51 includes a SPAD 52 (e.g., fully depleted) having its cathode connected to node Nn and its anode connected to a negative voltage VNEG2 through a deep trench isolation parasitic capacitance Cdti that results from the fact that the SPAD 52 is formed using three dimensional SPAD technology in which different SPADs are separated from one another by deep trench isolations. The negative voltage VNEG2 may be, for example, -24V. The fact that the top tier chip 51 does not include other components other than the SPADs decreases the cost of fabrication and increases fill factor and quantum efficiency.

The bottom tier chip 55 includes a double or thin layer gate oxide (GO2 or GO1) p-channel transistor MP 1 having its source connected to a supply node to receive a supply voltage VDD (e.g., 1V), its gate connected to a quench control voltage VQ, and its drain connected to the source of a double or thin layer gate oxide (GO2 or GO1) p-channel transistor MP2. The quench control voltage VQ is set so as to maintain the transistor MP1 in the linear mode of operation and therefore act as a resistor of a desired value.

The p-channel transistor MP2 has its source connected to the drain of transistor MP1, its drain connected to the source of extended drain double layer gate oxide (GO2) p-channel transistor MP3, and its gate connected to an enable signal EN. The p-channel transistor MP3 has its source connected to the drain of transistor MP2, its drain connected to node Nn, and its gate connected to a cascode control signal VCAS.

The bottom tier chip 55 further includes a clamp diode 56 having its cathode connected to node Nn and its anode connected to the negative voltage VNEG1, the negative voltage VNEG1 being, for example, -4V. The clamp diode 56 maintains the SPAD 52 as being off when transistor MP2 is not enabled. A metal-oxide-metal (MOM) capacitor Cmom is connected between nodes Nn and N1, and a cathode-side capacitor Ccathode is connected between node Nn and ground. An output inverter 58 has its input connected to node N1 and generates an output signal OUT at its output. A double layer gate oxide (GO2) p-channel transistor MP4 has its source connected to the supply voltage VDD, its drain connected to node N1, and its gate connected to a filter control signal VHPF that sets the transistor MP4 into the linear mode of operation to thereby act as a resistor and, in conjunction with a ballast capacitor Cballast that is connected between node N1 and ground, act as high pass RC filter. Note that the representation of the ballast capacitor Cballast in the schematic also includes parasitic capacitances within the pixel 50. An AND gate 19 performs a logical AND between the output signal OUT and a main enable signal MAIN_ENABLE and generates a main output signal MAIN_OUT based upon that logical operation.

Referring additionally to FIG. 5, prior to enablement of the pixel 50 at time T0, the cathode of the SPAD 52 is at a voltage of *VNEG*1 - 0.77, with the 0.7V being the voltage drop across the SPAD 56. Assuming that by time T0, the capacitor Ccathode has been substantially discharged to ground. To enable the pixel 50, the enable signal EN is asserted (to a logic low) at time T0. This turns on the p-channel transistor MP2 into saturation, with the conductivity of transistors MP1 and MP3 being set by the quench signal VQ and cascode control signal VCAS respectively - in particular, transistor MP1 is set by the quench control signal VQ to operate in the linear mode of operation and act as a resistor. Current will then conduct from the supply voltage node VDD to charge the capacitor Ccathode, reverse biasing the SPAD 52 above its breakdown voltage. As can be observed in FIG. 5, this charging of capacitor Ccathode through the high impedance of transistor MP1 (e.g., through a high impedance path) causes a relatively slow rise time of the cathode voltage of the SPAD 52. At this point, time T1, the pixel 50 is enabled and operating properly. The activation of the laser source 17 is set such that the pixel 50 is fully enabled immediately after the receipt of the reflection of the laser from the glass 18.

To continue with the description - at time T2 during normal operation, for example a photon impinges upon the SPAD 52 and a detection event occurs. In this example, at time T3, disablement of the pixel 50 begins with de-assertion of the enable signal EN back to a logic high. At this point, however, the capacitor Ccathode is still charged. Once another photon strikes the SPAD 52, it will avalanche, discharging the capacitor Ccathode, therefore discharging the cathode voltage of the SPAD 52 to approximately 0.7V to properly disable the pixel 50, as can be observed at time T4. This results in the SPAD 52 being biased well below its breakdown voltage, with the leakage current through the diode 16 serving to maintain this voltage. Thus, a single avalanche is used to discharge the capacitor Ccathode to disable the pixel 50. The main enable signal MAIN_ENABLE is the inverse of the enable signal EN such that avalanches of the SPAD 52 that occur after disable begins (e.g., deassertion of the enable signal EN) do not yield a false detection. Notice that the discharge of the capacitor Ccathode occurs quickly compared to the time involved to charge the capacitor Ccathode. The elapsed time between times T3 and T4 is dependent upon the ambient illumination.

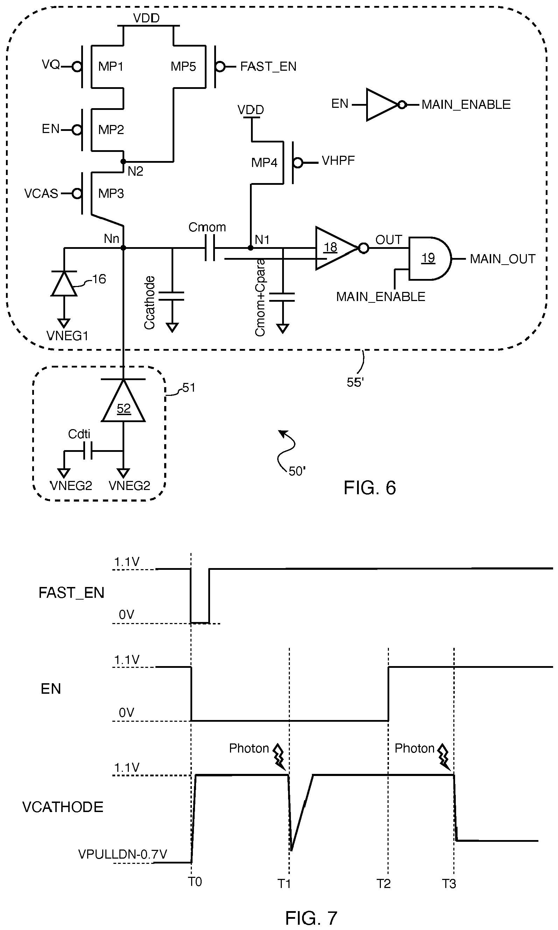

This embodiment of the SPAD pixel 50 of FIG. 4 is effective for applications in which quick disable is desired, but may not be suitable for applications in which a quick enable is desired. An additional embodiment of the SPAD pixel 50', in which quick enable as well as disable is available, is now described with reference to FIG. 6.

The SPAD pixel 50' of FIG. 6 is the same as the SPAD pixel 50 of FIG. 4, except here an additional double or thin layer gate oxide (GO2 or GO1) p-channel transistor MP4 has its source connected to the supply voltage node VDD, its drain connected to the drain of transistor MP2 and source of transistor MP3 at node N2, and its gate connected to a fast enable signal FASTEN.

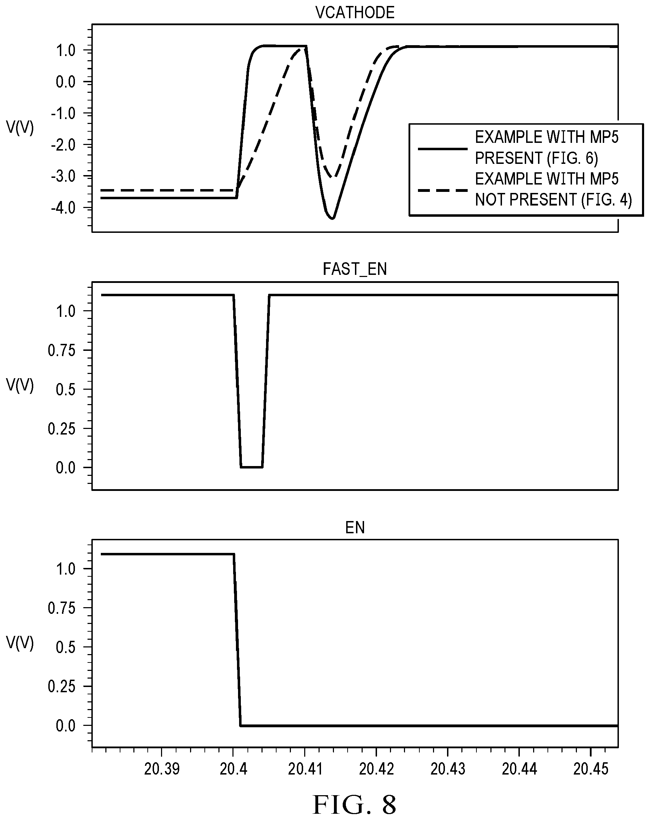

Operation is now described with additional reference to FIG. 7. Assuming that by time T0, the capacitor Ccathode has been substantially discharged to ground. At time T0, the fast enable signal FAST_EN and EN are asserted to a logic low at the same time, thereby fully turning on GO1 transistor MP5 (with a high W/L ratio), forming a short from the supply voltage VDD to node N2 (e.g., forming a low impedance path substantially lower in impedance than the path through transistors MP1 and MP2) by bypassing high impedance MP1 and the enable transistor MP2. This provides for a quick inrush of current to charge the capacitor Ccathode. Therefore, the cathode voltage of the SPAD 52 quickly rises to exceed the breakdown voltage of the SPAD 52, as shown in FIG. 7. The pulse width of pulse FAST_EN is calibrated (ie., few 100of Ps) to help ensure that capacitor Ccathode if fully charged). This rise in the cathode voltage of the SPAD 52 at enable of the pixel 50' of FIG. 6 is substantially quicker than that which occurs at enable of the pixel 50 of FIG. 4. The graph of FIG. 8 shows this substantial difference in quickness of charging the capacitor Ccathode between FIGS. 4 and 6, such increase in charging speed allowing for easy precise matching of the full enablement of the pixel 50' with the time immediately after receipt of the reflection of the laser off the glass 18.

Returning now to FIG. 7, with the pixel 50' now being fully enabled, at time T1 during normal operation, a photon impinges upon the SPAD 52 and a detection event occurs. In this example, at time T2, disablement of the pixel 50' begins with de-assertion of the enable signal EN back to a logic high. At this point, the capacitor Ccathode is still charged. Once another photon strikes the SPAD 52, it will avalanche, discharging the capacitor Ccathode, therefore discharging the cathode voltage of the SPAD 52 to approximately 0.7V to properly disable the pixel 50' with the SPAD 52 being biased well below its breakdown voltage, as can be observed at time T3. The elapsed time between times T2 and T3 is dependent upon the ambient illumination. As stated earlier, the main enable signal MAIN_ENABLE, being is the inverse of the enable signal EN, serves to prevent avalanches of the SPAD 52 that occur after disable begins from yielding a false detection.

Finally, it is clear that modifications and variations may be made to what has been described and illustrated herein, without thereby departing from the scope of this disclosure, as defined in the annexed claims.

While the disclosure has been described with respect to a limited number of embodiments, those skilled in the art, having benefit of this disclosure, will appreciate that other embodiments can be envisioned that do not depart from the scope of the disclosure as disclosed herein. Accordingly, the scope of the disclosure shall be limited only by the attached claims.

## Claims

1. A pixel, comprising:
a SPAD having a cathode connected to a first node and an anode coupled to a first negative voltage;
a transistor circuit coupled between a supply voltage node and a third node, said transistor circuit configured to turn on in response to an enable signal;
a cascode transistor connected between the third node and the first node, the cascode transistor controlled by a cascode control signal; and
a cathode setting capacitor connected between the first node and ground;
a readout inverter coupled between an intermediate node and an output node, the readout inverter configured to generate an output signal in response to a voltage at the intermediate node; and
wherein a photon impinging upon the SPAD causes avalanche of the SPAD which, when occurring after turn off of the transistor circuit, serves to discharge the cathode setting capacitor.

2. The pixel of claim 1,
wherein the transistor circuit includes a selectable high impedance path and a selectable low impedance path; and
wherein the transistor circuit is configured to select the low impedance path for sourcing of the current from the supply voltage node to the cathode setting capacitor and select the high impedance path for normal operation after the reverse bias voltage of the SPAD is set to greater than the breakdown voltage of the SPAD.

3. The pixel of claim 1 or 2, wherein the transistor circuit comprises:
a quench transistor connected between the supply voltage node and a second node, the quench transistor being controlled by a quench control signal to operate in a high-impedance mode; and
an enable transistor connected between the second node and the third node, the enable transistor being controlled by the enable signal.

4. The pixel of claim 3, wherein the transistor circuit further comprises a fast charge transistor connected between the supply voltage node and the third node, the transistor circuit being controlled by a fast enable signal, the fast enable signal being asserted prior to assertion of the enable signal and being deasserted after assertion of the enable signal.

5. The pixel of claim 4, wherein the fast charge transistor comprises a double layer gate oxide p-channel transistor having its source connected to the supply voltage node, its drain connected to the third node, and its gate connected to the fast enable signal.

6. The pixel of claim 5, wherein the cascode transistor is an extended drain p-channel transistor having its source connected to the third node, its drain connected to the first node, and its gate controlled by the cascode control signal.

7. The pixel of claim 6, wherein the enable transistor is a thin gate oxide p-channel transistor having its source connected to a fourth node, its drain connected to the intermediate node, and its gate controlled by the enable signal.

8. The pixel of claim 7, wherein the quench transistor is a first p-channel transistor having its source connected to the supply voltage node, its drain connected to the fourth node, and its gate controlled by the quench control signal.

9. The pixel of any of claims 1 to 8, wherein the logic circuit comprises an AND gate configured to perform a logical AND operation between the output signal and a main enable signal, the main enable signal being at logic high when the transistor circuit is turned on and being a logic low when the transistor circuit is turned off.

10. An array of single photon avalanche diodes (SPADs), comprising:
a plurality of pixels according to any of claims 1 to 9; and
a logic circuit connected to receive the output signal and pass the output signal as a main output signal when the transistor circuit is turned on but block the output signal when the transistor circuit is turned off;
wherein turn on of the transistor circuit serves to source current from the supply voltage node to the cathode setting capacitor to charge the cathode setting capacitor, thereby setting a reverse bias voltage across the SPAD to greater than a breakdown voltage of the SPAD;.

11. A method of detecting photons impinging upon a single photon avalanche diode (SPAD) within a pixel, the method comprising:
enabling the SPAD for photon detection by pre-charging a capacitor coupled between a cathode of the SPAD and a reference voltage and, after pre-charging of the capacitor, electrically coupling the cathode of the SPAD to a supply voltage;
performing photon detection using the SPAD;
electrically decoupling the cathode of the SPAD from the supply voltage; and
receiving a photon at the SPAD to thereby cause the SPAD to avalanche, the avalanching of the SPAD causing to discharge the capacitor through the SPAD.

12. The method of claim 11, wherein the pre-charging of the capacitor is performed by connecting a low-impedance path between the supply voltage and the cathode of the SPAD.

13. The method of claim 11 or 12, wherein electrically coupling the cathode of the SPAD to the supply voltage is performed by connecting a high-impedance path between the supply voltage and the cathode of the SPAD.

14. The method of any of claims 11 to 13, further comprising ignoring photon detection after electrical decoupling of the cathode from the supply voltage.
